# EUROPEAN PATENT SPECIFICATION

(11) **EP 2 240 716 B1**
(45) Date of publication and mention of the grant of the patent: **07.05.2014**
(21) Application number: 08870237.8
(22) Date of filing: 11.12.2008
(51) Int. Cl.: F16K 47/08

(54) **SEAL ASSEMBLY FOR USE WITH VALVES HAVING A TWO-PIECE CAGE**
DICHTUNGSANORDNUNG EINES VENTILS MIT EINEM ZWEITEILIGEN VENTILEINSATZ
ENSEMBLE JOINT D'ÉTANCHÉITÉ DESTINÉ À ÊTRE UTILISÉ AVEC UNE CAGE FORMÉE DE DEUX ÉLÉMENTS

(30) Priority: 11.01.2008 US 13041
(43) Date of publication of application: 20.10.2010
(73) Proprietor: Fisher Controls International LLC, St. Louis, MO 63136 (US)
(72) Inventor: FLEMING, Leslie, E., Marshalltown IA 50158 (US)
(74) Representative: Bohnenberger, Johannes
(86) International application number: PCT/US2008/086339
(87) International publication number: WO 2009/088632

(56) References cited:
- GB-A- 2 019 036
- US-A- 3 780 767
- US-A1- 2004 011 986

## Description

### FIELD OF THE DISCLOSURE

This disclosure relates generally to valves and, more particularly, to a seal assembly for use with valves having a two-piece cage.

### BACKGROUND

Valves are commonly used in process control systems to control the flow of process fluids. Linear valves (e.g., a gate valve, a globe valve, a diaphragm valve, a pinch valve, etc.) typically have a closure member (e.g., a valve plug) disposed in a fluid path. A valve stem operatively couples the closure member to an actuator that moves the closure member between an open position and a closed position to allow or restrict the flow of fluid between an inlet and an outlet of the valve. Additionally, to provide a desired and/or to achieve certain flow characteristics of the fluid, valves often employ a cage that interposes in the path of fluid between the inlet and the outlet of the valve. A cage can reduce capacity flow, attenuate noise, and/or reduce or eliminate cavitation. Additionally, a cage surrounds the closure member to provide stability, balance, and alignment to the closure member.

To effect a seal between a cage and a closure member, the closure member typically includes a channel or groove that receives a seal or piston ring that engages an inner surface of the cage. Typically, industrial process conditions such as pressure conditions and operational temperatures (e.g., super heated steam applications) of the process fluids dictate the type of valve and valve components that may be used such as, for example, the types of seals that may be used to effect a seal between a cage and a closure member. For high temperature applications, flexible valve seals (e.g., a polymeric seal) cannot be used due their inability to withstand high temperatures.

In high-temperature applications (e.g., greater than 450°F), because of its resistance to high temperature, a carbon-fiber piston ring may be used. However, because of its brittle characteristic and lack of elasticity, the carbon-fiber piston ring cannot be installed intact and must be broken into pieces prior to being installed in the groove of the closure member, which may may cause undesired leakage between the closure member and the cage. Additionally, the pressure differential of the fluid between the inlet and the outlet of the valve is used to pressure assist or load the seal against the sealing surface (i.e., the walls formed by the groove of the closure member) to effect a seal between the cage and the closure member. However, during low pressure applications, fluid pressure may be insufficient to pressure assist the seal against the sealing surface, thereby causing undesired leakage through the valve.

Document US 2004/011986 (A1) discloses a seal assembly for use with valves having a two-piece cage according to the preamble of independent claim 1.

### Summary of the Invention

The present invention discloses a seal assembly for use with valves having a two-piece cage according to independent claim 1. Further embodiments of the invention are realised by the corresponding dependent claims.

An example seal assembly for use with valves having a two-piece cage described herein includes a body defining a bore extending along an axis to slidably receive a closure member. The body includes a first portion removably coupled to a second portion. The first portion includes a first groove and the second portion includes a second groove. The first and second grooves form a sealing surface when the first portion couples to the second portion. The example seal assembly further includes at least one sealing member disposed adjacent the sealing surface to provide a seal against the closure member and a biasing element to bias the sealing member toward the sealing surface.

In another example, a valve includes a valve body having an inlet port and an outlet port and a closure member to be operatively coupled to an actuator. The valve further includes a cage has a body and a sealing surface disposed along the body of the cage. The cage has a first opening to receive the closure member and a second opening to control the flow characteristics of fluid through the control valve. The valve further includes a sealing member disposed adjacent the sealing surface of the cage to provide a seal between the cage and the closure member and a valve seat defining an opening between the inlet port and the outlet port.

### BRIEF DESCRIPTION OF THE DRAWINGS

FIG. 1A is a cross-sectional view of a portion of a known valve.
FIG. 2A illustrates a cross-sectional view of an example valve similar to that shown in FIG. 1A, but implemented with the example valve trim seal assembly described herein.
FIG. 2B illustrates an enlarged cross-sectional view of a portion of the valve trim seal assembly shown in FIG. 2A.

### DETAILED DESCRIPTION

The example seal assembly described herein may be used with valves having a sliding stem such as, for example, control valves, throttling valves, etc., that include a valve trim arrangement having a two-piece cage. The example seal assembly described herein provides a seal to prevent undesired leakage between a cage and a closure member of a valve. In particular, the example seal assembly includes at least one seal or piston ring (e.g., a carbon-fiber piston ring) disposed in a sealing surface of a two-piece cage. The example seal assembly is particularly advantageous in high-temperature fluid applications that require carbon fiber seals because the carbon-fiber seals can be installed without having to break the seals into pieces, thereby reducing or substantially eliminating installation error that may lead to undesired leakage between the cage and closure member. Additionally or alternatively, the example seal assembly described herein includes a biasing element (e.g., a wave washer) to provide a load to assist or bias the seal against the sealing surface of the cage, thereby eliminating reliance on the pressure differential of the process fluid to pressure assist the seal against the sealing surface.

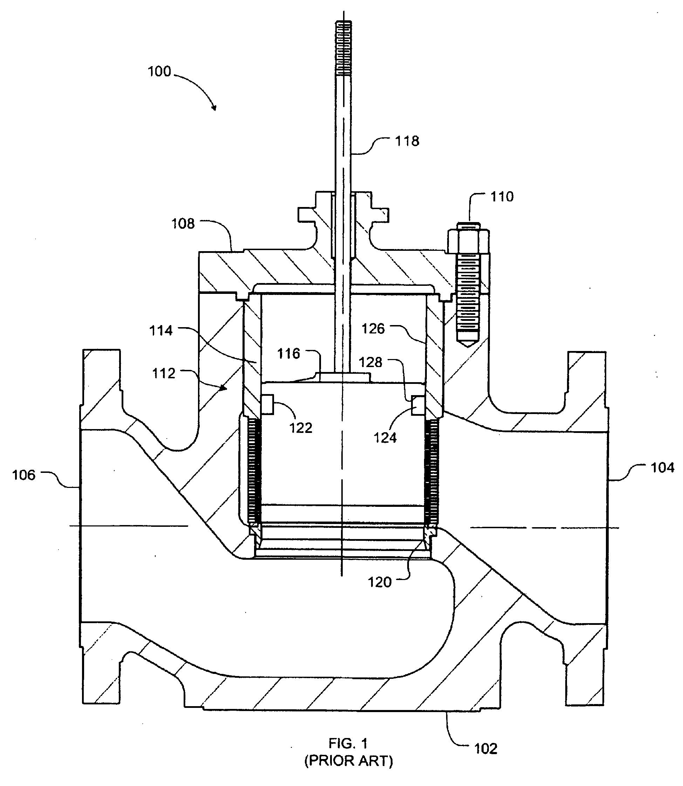

FIG. 1 illustrates a cross-sectional view of a portion of a known valve 100. The valve 100 illustrated in FIG. 1 includes a valve body 102 that defines a fluid flow passageway between an inlet 104 and an outlet 106. A bonnet 108 is coupled to the valve body 102 via fasteners 110 which, in turn, couples the valve body 102 to an actuator (not shown). Although not shown, the bonnet 108 may house a packing system and may include a plurality of fasteners that couple to the valve body 102. A valve trim assembly 112 disposed within the fluid flow passageway formed in the valve body 102 controls the flow of fluid between the inlet 104 and the outlet 106. The valve trim 112 includes internal components of the valve 100 such as, for example, a closure member, a valve seat, a cage, a stem, and a stem pin.

Referring to FIG. 1, to control fluid through the valve body 102, a cage 114 is disposed between the inlet 104 and the outlet 106 to provide certain flow characteristics of the fluid (e.g., reduce noise and/or cavitation generated by the flow of fluid through the valve 100). A cage can include various designs to provide certain fluid flow characteristics to suit the needs of a particular control application. For example, the cage 114 may be configured to provide particular, desirable fluid flow versus pressure drop characteristics. The cage 114 can also facilitate maintenance, removal, and/or replacement of the other components of the valve trim 112. In the illustrated example, the cage 114 is a substantially unitary structure. However, in other example implementations, the cage 114 can be a two-piece cage that includes an upper portion that removably couples to a lower portion.

A closure member 116 (e.g., a plug) has an outer surface sized to closely fit within the cage 114 so that the closure member 116 is slidable within the cage 114. A stem 118 operatively couples the closure member 116 to an actuator stem (not shown) which, in turn, couples the closure member 116 to an actuator (not shown). In operation, an actuator (e.g., a pneumatic actuator) drives the valve stem 118 and, thus, the closure member 116 between a closed position at which the closure member 116 is in sealing engagement with a valve seat 120 (e.g., a seat ring) to restrict the flow of fluid through the valve 100 to a fully open or maximum flow rate position at which the closure member 116 is away from the valve seat 120 to allow the flow of fluid through the valve 100.

The closure member 116 includes a channel or groove 122 to receive a seal or piston ring 124 that engages an inner surface 126 of the cage 114 to prevent fluid from leaking between the cage 114 and closure member 116. For high temperature applications, seals or piston rings made of elastomeric materials cannot be used due to their lack of resistance to high temperatures and, thus, an increase in operating temperature may permanently deform or damage the elastomeric seal or piston ring, thereby creating undesired leakage between the cage 114 and the closure member 116.

A carbon-fiber seal or piston ring may be used in high-temperature applications to withstand high-temperature fluid. However, because of its brittle characteristic and lack of elasticity, the carbon-fiber piston ring must be broken into pieces and installed in the groove 122 of the closure member 116. When broken, the broken pieces create jagged edges that matably engage when the broken pieces are installed in the groove 122 of the closure member 116. If the jagged edges are not aligned properly, the broken edges can disengage during high-pressure conditions and may cause undesired leakage between the closure member 114 and the inner surface 126 of the cage 114. Additionally, the carbon-fiber piston ring is typically pressure assisted against a sealing surface 128 of the closure member 116 and the inner surface 126 of the cage 114 with the pressure differential of the fluid as the fluid travels from the inlet 104 to the outlet 106 of the valve 100. However, in low-pressure situations, fluid pressure may be insufficient to load the seal 124 against the sealing surface 128, thereby causing undesired leakage to occur through the valve 100.

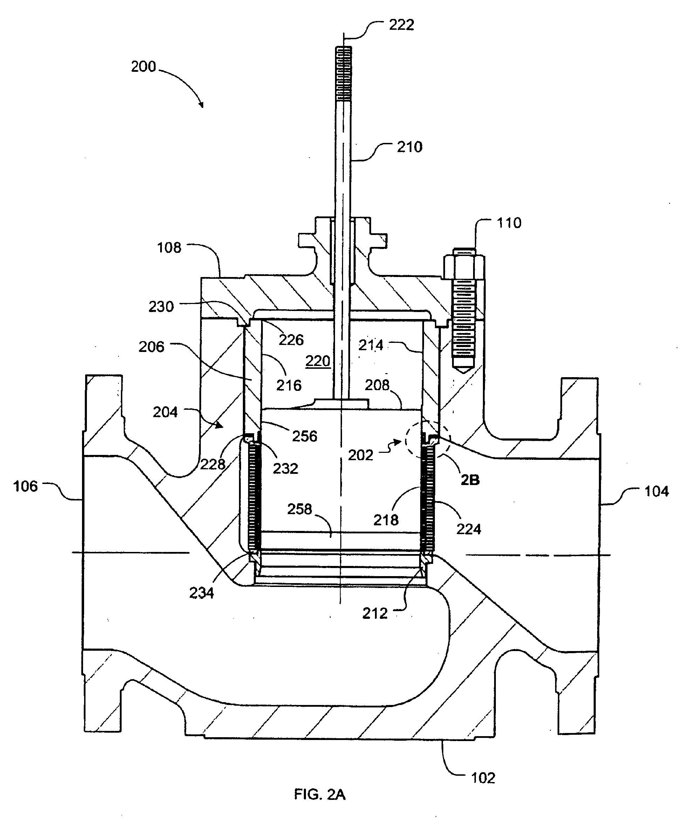

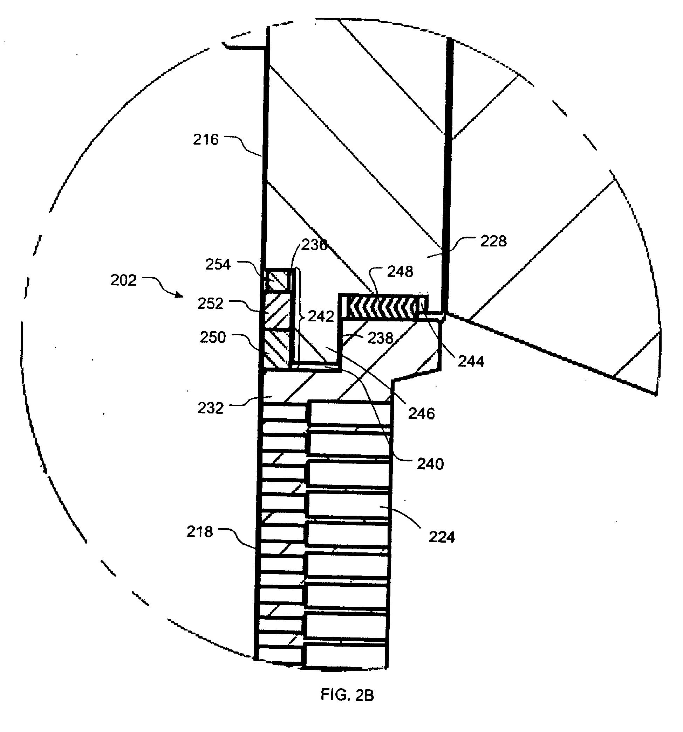

FIG. 2A illustrates a cross-sectional view of an example valve 200 similar to that shown in FIG. 1, but implemented with an example seal assembly 202 described herein. FIG. 2B illustrates an enlarged cross-sectional view of a portion of the example seal assembly 202 shown in FIG. 2A. Those components of the valve 200 that are similar or identical to those used in the example valve 100 of FIG. 1 are labeled with the same reference numbers. The description of those components of the example valve of FIG. 2A similar or identical to those of FIG. 1 is not repeated and the interested reader may refer to the description of FIG. 1 for details relating to those components.

Referring to FIGS. 2A and 2B, the example value 200 includes the example seal assembly 202 described herein. The valve 200 includes a valve trim assembly 204 disposed within a passageway formed by the valve body 102. The trim 204 includes a body or cage 206 implemented with the example valve seal assembly 202, a closure member 208, a valve stem 210, and a valve seat in the form of a seat ring 212. The example seal assembly 202 forms a seal between an inner surface 214 of the cage 206 and the closure member 208.

The cage 206 includes a first or upper portion 216 that removably couples to a second or lower portion 218. The upper portion 216 and the lower portion 218 are coupled together to form an opening or bore 220 along an axis 222 to slidably receive the closure member 208. The cage 206 guides the closure member 208 and provides lateral stability as the closure member 208 travels between the open position and a closed position, thereby reducing vibrations and other mechanical stress.

The upper portion 216 may be made of a first material (e.g., a steel alloy) and the lower portion 218 may be made of a second material (e.g., a stainless steel) different from the first material. This may be particularly advantageous in severe service applications (e.g., high temperature applications, corrosive applications), which may require more expensive resilient materials (e.g., corrosion resistant, etc.) and, thus, may reduce manufacturing costs by enabling the upper portion, which may not contact the fluid, to be made of a lower cost material. Additionally or alternatively, the upper portion 216 can be a solid, non-permeable cylinder or structure and the lower portion 218 can be a permeable cylinder or structure having at least one opening or orifice 224. The orifice 224 may be designed to provide desired fluid flow characteristics of the fluid such as, for example, to reduce noise and/or cavitation, to enhance pressure reductions of the process fluid, etc. The desired fluid flow characteristics are achieved by varying the geometry of the orifice 224. In some example implementations, the lower portion 218 of the cage 206 may include a plurality of openings having various shapes, sizes, and/or spacing to control the flow, reduce cavitation, and/or reduce noise through the valve.

The upper portion 216 of the cage 206 includes a first end 226 that engages the bonnet 108 and a second end 228 that engages the lower portion 218 of the cage 206. The first end 226 of the upper portion 216 may include a recessed edge 230 to properly align the cage 206 with the valve body 102. Likewise, the lower portion 218 includes a first end 232 that engages the upper portion 216 and a second end 234 that engages the seat ring 212. As most clearly shown in FIG. 2B, the second end 228 of the upper portion 216 may include a first groove or channel 236 and the first end 232 of the lower portion 218 may include a stepped wall 238 formed by a first groove or channel 240 so that when the upper and lower portions 216 and 218 are coupled together, the first grooves or channels 236 and 240 form a sealing surface 242 to receive the seal assembly 202. The seal assembly 202 is disposed adjacent the sealing surface 242 to provide a seal against the closure member 208.

The second end 228 of the upper portion 216 and/or the first end 232 of the lower portion 218 may include one or more shoulders to facilitate the precise alignment of the upper and lower portions 216 and 218 of the cage 206 and/or may be dimensioned or have shapes or geometries that result in an interference fit or press fit between the shoulders. In the illustrated example, the upper portion 216 includes a second groove or channel 244 to form a shoulder or wall 246 between the first and second grooves 236 and 244. The shoulder 246 engages the stepped wall 238 of the lower portion 218 to facilitate the alignment and removable coupling of the upper and lower portions 216 and 218 of the cage 206. When coupled together, the shoulder 246 engages the first groove 240 of the lower portion 218 such that the first groove 240 of the lower portion 216, the first groove 236 of the upper portion 216, and the shoulder 246 form the sealing surface 242 of the cage 206. Additionally or alternatively, the second groove 244 of the upper portion 216 can receive a gasket 248 to provide a seal between upper and lower portions 216 and 218 of the cage 206. In other example implementations, the first end 232 of the lower portion 218 may include a second groove or channel to form a shoulder between the first and the second grooves. In yet other example implementations, the upper and lower portions 216 and 218 of the cage 206 can be coupled via grease, fasteners, or any other suitable fasting mechanism(s).

The sealing surface 242 formed by the first grooves 236 and 240 of the upper and lower portions 216 and 218, respectively, and the shoulder 246 can be sized to receive at least one of a seal or piston ring 250. In the illustrated example, the seal ring 250 is disposed adjacent the sealing surface 242 of the cage 206 to provide a seal between the cage 206 and the closure member 208. The sealing surface 242 can be sized to receive the first seal 250 and a second seal 252. As illustrated, the first and the second seals 250 and 252 are carbon-fiber rings. In other example implementations, the first and the second seals 250 and 252 are elastomeric seals, carbon-fiber piston rings, a combination thereof, or any other seal made of any other suitable material(s) to effect a seal between the inner surface 214 of the cage 206 and the closure member 208. Furthermore, the seal or pistourings 250 and/or 252 can be installed intact without having to break them into pieces to install them around the sealing surface 242.

The seal assembly 202 described herein may also include a biasing element 254 that can be disposed adjacent the sealing surface 242 to provide a load to assist or bias the seals 250 and 252 against the sealing surface 242. The biasing element 254 can be a wave washer, a spring, or any other suitable biasing member or mechanism(s). The biasing element 254 eliminates the need to rely on the pressure differential of the fluid between the inlet 104 and the outlet 106 to pressure assist the seals 250 and 252 against the sealing surface 242 to provide an effective seal between the cage 206 and the closure member 208. In other example implementations, the biasing element 254 can be disposed between the first end 226 of the upper portion 216 of the cage 206 and the bonnet 108, or any other suitable position to bias the seals 250 and 252 against the sealing surface 242.

The closure member 208 has an outer surface 256 sized to closely fit within the cage 206 so that the closure member 208 can slide within the bore 220 of the cage 206. The closure member 208 can slide within the cage 206 between a closed position, in which the closure member 208 obstructs the orifice 224 of the cage 206, and an open position, in which the closure member 208 is clear of at least a portion of the orifice 224. The closure member 208 can also be positioned between fully open and closed positions to control the flow rate of fluid through the valve 200. In the illustrated example, the closure member 208 is depicted as a valve plug having a cylindrical body and a seating surface 258. However, in other example implementations, the closure member 208 may be a disk, or any other structure to vary the flow of fluid through a valve. The valve stem 210 operatively couples the closure member 208 to an actuator (not shown).

When the bonnet 108 is attached to the valve body 102, the bonnet 108 compresses the biasing element 254 which, in turn, compresses the seal members 250 and 252 against the sealing surface 242 of the cage 206. Additionally, the bonnet 108 compresses the cage 206 against the seat ring 212 to retain the seat ring 212 within the valve body 102 and compresses a gasket (not shown) between the seat ring 212 and the valve body 102. Furthermore, the bonnet 108 compresses the gasket 248 between the first portion 216 and the second portion 218 of the cage 206. In some example implementations, the valve 200 can include a gasket (not shown) that the bonnet 108 compresses between the bonnet 108 and both the cage 206 and the valve body 102 to contain fluid flowing within the valve body 102 and prevent undesired leakage.

In operation, an actuator (e.g., a pneumatic actuator) drives the closure member 208 between a closed position at which the seating surface 258 of the closure member 208 is in sealing engagement with the seat ring 212 (i.e., to restrict the flow of fluid through the valve) and a fully open or maximum flow rate position at which the seating surface 258 of the closure member 208 is away from the seat ring 212 (i.e., to allow the flow of fluid through the valve). The seat ring 212 couples to the cage 206 via, for example, interference and/or press fit, grease fit, fasteners, etc. As the closure member 208 moves away from the seat ring 212, the fluid (e.g., high-temperature steam) flows between the inlet 104 and the outlet 106. As the fluid flows between the inlet 104 and the outlet 106, the fluid flows between the closure member 208 and the inner surface 214 of the cage 206. The seal assembly 202 described herein prevents the fluid from leaking between the cage 206 and closure member 208 when the fluid is flowing through the valve 200. The biasing element 254 applies a load against the seals 250 and 252 to bias the seals 250 and 252 against the sealing surface 242 of the cage 206, thereby effecting a proper seal and preventing undesired fluid leakage between the cage 206 and the closure member 208.

The example seal assembly 202 described herein effects a seal between a cage and a closure member of a valve (e.g., the valve 200 of FIG. 2A). The cage includes an upper portion and a lower portion that couple together to form a sealing surface to receive at least one seal or piston ring. The example seal assembly 202 described herein is particularly advantageous in high temperature applications. Typically, for high temperature applications, carbon-fiber piston rings are used to withstand high-temperature process fluid and effect a seal between a cage and a closure member. In particular, the example seal assembly 202 described herein can be installed in intact (i.e., without having to break it into pieces) and disposed adjacent the sealing surface. Additionally or alternatively, the example seal assembly 202 described herein may include a biasing element (e.g., a wave washer) to load or bias a seal against a sealing surface of a cage, which substantially eliminates reliance on the differential pressure of the process fluid to pressure assist the seal against the sealing surface.

Although certain apparatus have been described herein, the scope of coverage of this patent is not limited thereto. To the contrary, this patent covers all apparatus fairly falling within the scope of the appended claims either literally or under the doctrine of equivalents.

The invention is defined by the appended claims.

## Claims

1. A seal assembly (202) for use with valves having a two-piece cage, comprising:
a body (102) defining a bore (220) extending along an axis (222) to slidably receive a closure member (208), wherein the body (102) includes a first portion (216) removably coupled to a second portion (218), wherein the first portion includes a first groove (236) and the second portion includes a second groove (240), and wherein the first and second grooves (236, 240) form a sealing surface (242) when the first portion (216) couples to the second portion (218);
at least one sealing member (250) disposed adjacent the sealing surface (242) to provide a seal against the closure member (208); and
a biasing element (254) to bias the sealing member (250) toward the sealing surface (242),
**characterized in that**
the first portion (216) further comprising a third groove (244), the first portion (216) including a shoulder (246) formed between the first groove (236) and the third groove (244).

2. An apparatus as defined in claim 1, wherein the second groove (240) receives the shoulder (246) when the first portion (216) couples to the second portion (218), and wherein the shoulder (246), the first groove (236), and the second groove (240) form the sealing surface (242) to receive the at least one sealing member (250).

3. An apparatus as defined in claim 1, wherein the third groove (244) is sized to receive a gasket (248).

4. An apparatus defined in claim 1, further comprising a valve seat (120) coupled to the second portion (218) and a valve stem (210) coupled to the closure member (208).

5. An apparatus as defined in claim 1, wherein the first portion (216) of the body (102) comprises a first material and the second portion (218) of the body comprises a second material different from the first portion (216).

6. An apparatus defined in claim 1, wherein the first portion (216) of the body is non-permeable and the second portion (218) of the body is permeable.

7. An apparatus as defined in claim 1, wherein the at least one sealing member (250) comprises a ring.

8. An apparatus as defined in claim 1, wherein the sealing member (250) comprises a carbon-fiber ring.

9. An apparatus as defined in claim 1, wherein the biasing element (254) comprises a wave washer or a spring.

10. An apparatus as defined in claim 1, wherein a first sealing member (250) and a second sealing member (252) are disposed adjacent to the sealing surface (242).

## Patentansprüche

1. Dichtungssystem (202) zur Verwendung bei Ventilen mit einem zweiteiligen Käfig, Folgendes umfassend:
einen Körper (102), der eine sich entlang einer Achse (222) erstreckende Bohrung (220) zur gleitbeweglichen Aufnahme eines Schließteils (208) definiert, wobei der Körper (102) einen ersten Abschnitt (216) aufweist, der entfernbar mit einem zweiten Abschnitt (218) verbunden ist, wobei der erste Abschnitt eine erste Nut (236) enthält und der zweite Abschnitt eine zweite Nut (240) enthält, und wobei der erste und zweite Abschnitt (236, 240) eine Dichtfläche (242) bilden, wenn sich der erste Abschnitt (216) mit dem zweiten Abschnitt (218) verbindet;
mindestens ein Dichtungsteil (250), das angrenzend an die Dichtfläche (242) zur Bereitstellung einer Abdichtung gegen das Schließteil (208) angeordnet ist; und
ein Vorspannungselement (254) zum Vorspannen des Dichtungsteils (250) zur Dichtfläche (242) hin,
**dadurch gekennzeichnet, dass**
der erste Abschnitt (216) darüber hinaus eine dritte Nut (244) enthält, wobei der erste Abschnitt (216) eine Schulter (246) aufweist, die zwischen der ersten Nut (236) und der dritten Nut (244) gebildet ist.

2. Vorrichtung nach Anspruch 1, wobei die zweite Nut (240) die Schulter (246) aufnimmt, wenn sich der erste Abschnitt (216) mit dem zweiten Abschnitt (218) verbindet, und wobei die Schulter (246), die erste Nut (236) und die zweite Nut (240) die Dichtfläche (242) zur Aufnahme des mindestens einen Dichtungsteils (250) bilden.

3. Vorrichtung nach Anspruch 1, wobei die dritte Nut (244) zur Aufnahme einer Dichtung (248) bemessen ist.

4. Vorrichtung nach Anspruch 1, darüber hinaus einen Ventilsitz (120), der mit dem zweiten Abschnitt (218) verbunden ist, und einen Ventilschaft (210) aufweisend, der mit dem Schließteil (208) verbunden ist.

5. Vorrichtung nach Anspruch 1, wobei der erste Abschnitt des Körpers (102) ein erstes Material aufweist und der zweite Abschnitt (218) des Körpers (102) ein zweites Material aufweist.

6. Vorrichtung nach Anspruch 1, wobei der erste Abschnitt (216) des Körpers nichtdurchlässig ist und der zweite Abschnitt (218) des Körpers durchlässig ist.

7. Vorrichtung nach Anspruch 1, wobei das mindestens eine Dichtungsteil (250) einen Ring aufweist.

8. Vorrichtung nach Anspruch 1, wobei das Dichtungsteil (250) einen Carbonfaserring aufweist.

9. Vorrichtung nach Anspruch 1, wobei das Vorspannungselement (254) eine Wellenscheibe oder eine Feder aufweist.

10. Vorrichtung nach Anspruch 1, wobei das erste Dichtungsteil (250) und ein zweites Dichtungsteil (252) angrenzend an die Dichtfläche (242) angeordnet sind.

## Revendications

1. Ensemble de joint (202) à utiliser avec des soupapes comprenant une cage formée de deux éléments, comprenant:
un corps (102) définissant un alésage (220) qui s'étend le long d'un axe (222) afin de recevoir de façon coulissante un élément de fermeture (208), dans lequel le corps (102) comprend une première partie (216) qui est couplée de façon détachable à une deuxième partie (218), dans lequel la première partie comporte une première rainure (236) et la deuxième partie comporte une deuxième rainure (240), et dans lequel les première et deuxième rainures (236, 240) forment une surface d'étanchéité (242) lorsque la première partie (216) se couple à la deuxième partie (218);
au moins un élément d'étanchéité (250) qui est disposé à proximité de la surface d'étanchéité (242) afin de former un joint contre l'élément de fermeture (208); et
un élément de poussée (254) pour pousser l'élément d'étanchéité (250) en direction de la surface d'étanchéité (242),
**caractérisé en ce que** la première partie (216) comporte en outre une troisième rainure (244), la première partie (216) comprenant un épaulement (246) qui est formé entre la première rainure (236) et la troisième rainure (244).

2. Appareil selon la revendication 1, dans lequel la deuxième rainure (240) reçoit l'épaulement (246) lorsque la première partie (216) se couple à la deuxième partie (218), et dans lequel l'épaulement (246), la première rainure (236) et la deuxième rainure (240) forment la surface d'étanchéité (242) pour recevoir ledit au moins un élément d'étanchéité (250).

3. Appareil selon la revendication 1, dans lequel la troisième rainure (244) est dimensionnée de manière à recevoir une garniture (248).

4. Appareil selon la revendication 1, comprenant en outre un siège de soupape (120) qui est couplé à la deuxième partie (218), et une tige de soupape (210) qui est couplée à l'élément de fermeture (208).

5. Appareil selon la revendication 1, dans lequel la première partie (216) du corps (102) comprend un premier matériau, et la deuxième partie (218) du corps comprend un deuxième matériau qui est différent de celui de la première partie.

6. Appareil selon la revendication 1, dans lequel la première partie (216) du corps est non perméable, et la deuxième partie (218) du corps est perméable.

7. Appareil selon la revendication 1, dans lequel au moins un élément d'étanchéité (250) comprend une bague.

8. Appareil selon la revendication 1, dans lequel l'élément d'étanchéité (250) comprend une bague en fibre de carbone.

9. Appareil selon la revendication 1, dans lequel l'élément de poussée (254) comprend une rondelle ondulée ou un ressort.

10. Appareil selon la revendication 1, dans lequel un premier élément d'étanchéité (250) et un deuxième élément d'étanchéité (252) sont disposés à proximité de la surface d'étanchéité (242).
